Europäisches Patentamt

European Patent Office

Office européen des brevets

(19)

(11) Veröffentlichungsnummer: **0 007 507**
**B1**

(12) # EUROPÄISCHE PATENTSCHRIFT

(45) Veröffentlichungstag der Patentschrift:
**12.05.82**

(51) Int. Cl.³: **C 12 C 11/04**

(21) Anmeldenummer: **79102345.0**

(22) Anmeldetag: **09.07.79**

(54) Verfahren zur Vergärung von Würze zu Bier.

(30) Priorität: **20.07.78 DE 2831979**

(43) Veröffentlichungstag der Anmeldung:
**06.02.80 Patentblatt 80/3**

(45) Bekanntmachung des Hinweises auf die Patenterteilung:
**12.05.82 Patentblatt 82/19**

(84) Benannte Vertragsstaaten:
**AT BE FR NL**

(56) Entgegenhaltungen:
**keine**

(73) Patentinhaber: **Linde Aktiengesellschaft,
Abraham-Lincoln-Strasse 21, D-6200 Wiesbaden (DE)**

(72) Erfinder: **Brenik, Wenzel, Edelweissstrasse 4,
D-8022 Grünwald (DE)**
Erfinder: **Rudhard, Heinz, Egerlandstrasse 48,
D-8191 Geretsried 1 (DE)**

(74) Vertreter: **Schaefer, Gerhard, Dr., Linde
Aktiengesellschaft Zentrale Patentabteilung,
D-8023 Höllriegelskreuth (DE)**

## Verfahren zur Vergärung von Würze zu Bier

Die Erfindung betrifft ein Verfahren zur chargenweisen Vergärung von Würze zu Bier, bei dem der Würze Hefe zugesetzt und der Würze zur Einstellung des erforderlichen Sauerstoffgehaltes Sauerstoff oder ein sauerstoffhaltiges Gas zugeführt wird.

Bei der Bierbereitung wird die aus Malz bereitete Würze vor der Gärung mit Hopfen gekocht, filtriert und gekühlt. Je nach Art der Gärung wird die gekühlte Würze mit einer obergärigen oder einer untergärigen Hefe versetzt und in der sogenannten Hauptgärung weitgehend vergoren. Handelt es sich um ein untergäriges Bier, so findet im Anschluß an die Hauptgärung eine Nachgärung statt. Zum »Anstellen«, d. h. zum Versetzen der Würze mit Hefe, wird der Würze entweder eine Hefe-Würze-Suspension zugegeben oder die Würze wird »geimpft«. Nach bekannten Verfahren wird im ersten Fall eine Hefe-Würze-Suspension zur gründlichen Vermischung und intensiven Sauerstoffversorgung mit Luft aufgezogen und die Suspension der Würze zugegeben. Im zweiten Fall wird die Würze auf mehrere Gärbottiche verteilt und mit Hefe versetzt. Nach Beginn der Gärung werden die nur teilweise gefüllten Gärbottiche mit weiterer Würze gefüllt. In beiden Fällen wird die Würze nach der vollständigen Befüllung eines Gärbottichs intensiv belüftet, um den für die Vermehrung der Hefezellen erforderlichen Sauerstoff bereitzustellen. Bei einer chargenweisen Vergärung bleibt die Würze im Anschluß an die Belüftung in Ruhe.

Die Einleitung von Luft hat den Nachteil, daß vor allem im eigentlichen Hauptgärvorgang eine starke Schaumbildung einsetzt. Ein Gärbottich kann daher in seinem Volumen nur begrenzt genutzt werden, da ein Teil seines Volumens für die zu erwartende Schaumbildung ungefüllt bleiben muß.

Durch die FR-A-2 139 915 ist ein Verfahren zur Herstellung von Bier bekannt, bei dem Würze chargenweise vergärt werden kann und der Würze zur Fermentation ein sauerstoffhaltiges Gas zugeführt werden kann. Ziel des in der bekannten Druckschrift beschriebenen Verfahrens ist die Herstellung eines alkoholfreien bzw. alkoholarmen Bieres, das einen angenehmen Geschmack besitzt. Dieses Ziel soll durch die Zugabe von Sauerstoff oder einem sauerstoffhaltigen Gas gelöst werden. Bei diesem bekannten Verfahren wird gebildeter Schaum mechanisch zerstört.

Es ist daher Aufgabe der Erfindung, ein Verfahren zu entwickeln, mit dem die Schaumbildung reduziert werden kann und das den bisherigen Verfahren wirtschaftlich überlegen ist.

Diese Aufgabe wird erfindungsgemäß dadurch gelöst, daß der Würze pro Liter eine Menge von 1 bis 1,6 · $10^{-3}$ Nm³ reiner Sauerstoff

oder eine entsprechende Menge an Sauerstoff angereicherter Luft zugeführt wird.

In Versuchen, die nach dieser Verfahrensweise durchgeführt worden sind, ist festgestellt worden, daß bei einer chargenweisen Vergärung von Würze zu Bier die Schaumbildung reduziert werden kann. Durch die geringere Schaumbildung wird im Gärbottich zusätzliches Volumen für die Befüllung geschaffen. Das Verfahren ist daher gerade bei chargenweiser Vergärung aus ökonomischer Sicht sehr vorteilhaft. Der geschilderte Effekt ist aber nur erzielbar, wenn bei der Versorgung der Würze mit Sauerstoff, die bisher in Form einer intensiven Belüftung erfolgte, reiner Sauerstoff oder zumindest sauerstoffangereicherte Luft zugeführt wird.

Je nach Verwendung obergäriger oder untergäriger Bierhefen steigt gegen Ende der Gärung Hefe an die Oberfläche des Bieres bzw. setzt sich am Boden ab. Es wurde nun festgestellt, daß bei dem erfindungsgemäßen Verfahren eine bessere Absetzbarkeit der Hefen erzielt wird. Im Vergleich dazu blieben die Hefen, die in der bisherigen Form belüftet worden waren, länger in Schwebe, als nach der Zuführung reinen Sauerstoffs oder mit Sauerstoff angereicherter Luft. Mit dem erfindungsgemäßen Verfahren wird nicht nur die Separierbarkeit der Hefe erhöht, sondern auch eine Verkürzung der Gärzeiten und somit eine bessere Kapitalauslastung erzielt.

Ein weiterer Vorteil des vorgeschlagenen Verfahrens ist darin zu sehen, daß mit dem Einsatz von Sauerstoff bzw. sauerstoffangereicherter Luft eine der Erhöhung des Sauerstoffpartialdruckes entsprechende Verminderung des Gasvolumens, das der Würze vor der Gärung zugeleitet wird, erreicht werden kann. Der geringe Gasbedarf erleichtert und verbessert eine genaue Regelung der Gaszufuhr.

Nach einem Merkmal des Erfindungsgedankens werden der Würze pro Liter eine Menge von 1 bis 1,6 · $10^{-3}$ Nm³ reiner Sauerstoff oder eine entsprechend größere Menge an Sauerstoff angereicherter Luft zugeführt. Im Vergleich zur Versorgung mit Luft ist das unter Berücksichtigung der Verluste ein um einen Faktor 5 bis 8 geringeres Gasvolumen, das der Würze zugeführt wird. Es ist festgestellt worden, daß bei dieser Sauerstoffrate einerseits eine für ein optimales Wachstum der Hefezellen und damit für die Alkoholbildung völlig ausreichende Sauerstoffversorgung der Würze gewährleistet ist und andererseits eine spürbare Reduzierung der Schaumbildung erzielt werden kann.

Eine vorteilhafte Vorrichtung zu Durchführung des erfindungsgemäßen Verfahrens besteht aus einem Gärbottich mit Gaseintragsvorrichtungen. Zum Einleiten des reinen Sauerstoffs bzw. der sauerstoffangereicherten Luft kommen vor allem Systeme in Frage, über die in kurzer Zeit eine ausreichende Sauerstoffmenge in möglichst feinverteilter Form in die Würze geleitet werden kann. Hierfür eignen sich in besonderer Weise z. B. Filterkerzen, Injektorsysteme, rotierende oder pneumatische Gaseintragsysteme oder Kombinationen der genannten Systeme. Es ist vorteilhaft, diese Systeme über Regelvorrichtungen und eine Mischvorrichtung an Zufuhrsysteme für Sauerstoff und Luft anzuschließen. So besteht die Möglichkeit, sowohl reinen Sauerstoff als auch beliebige Sauerstoff-Luft-Gemische in die Gärbottiche einleiten zu können.

Im folgenden soll ein Ausführungsbeispiel des erfindungsgemäßen Verfahrens anhand einer schematischen Skizze erläutert werden:

Am Boden eines Gärbottichs 1 ist eines oder sind mehrere der oben aufgezählten Gaseintragsysteme 4 angeordnet. Ist der Gärbottich 1 über einen Zulauf 2 mit Würze befüllt worden, so folgt die intensive Begasung, das heißt die Versorgung der mit Hefe versetzten Würze mit Sauerstoff. Dazu sind die Gaseintragsysteme 4 über eine Leitung 13 an eine Sauerstoff- bzw. Luftquelle angeschlossen. Der Sauerstoff kann z. B. in Flaschen oder Flaschenbündeln 11 gespeichert werden. Über einen Druckminderer 12 wird der in den Sauerstoffflaschen herrschende Druck auf den zur Einleitung in den Gärbottich erforderlichen Druck herabgesetzt. Über ein Regelventil 7 wird die dem Gärbottich 1 pro Zeiteinheit zuzuführende Sauerstoffmenge geregelt und mit einem Durchfluß-Meßgerät 9 bestimmt. Soll in die Würze sauerstoffangereicherte Luft eingeleitet werden, wird dem Sauerstoff bei Punkt 5 eine über ein Regelventil 6 einstellbare und mit einem weiteren Durchfluß-meßgerät 8 bestimmbare Luftmenge beigemischt. Zur Beseitigung von Krankheitserregern, Luftverunreinigungen usw. wird die Luft in geeigneter Weise, z. B. in Filtersystemen, vorbehandelt und über einen Kompressor 10 angesaugt. Pro Liter Würze wird nun eine Menge von z. B. $1,4 \cdot 10^{-3}$ Nm$^3$ reinen Sauerstoffs bzw. bei einer Luftzumischung eine entsprechend größere Menge an sauerstoffangereicherter Luft in den Gärbottich 1 geleitet. Dazu werden die Regelventile 6, 7 nach einer von der Durchflußrate bestimmten Zeit automatisch geschlossen. Nach Abschluß der Sauerstoffversorgung bleibt die Würze in Ruhe. Die vergorene Würze kann über einen Ablauf 3 abgezogen werden.

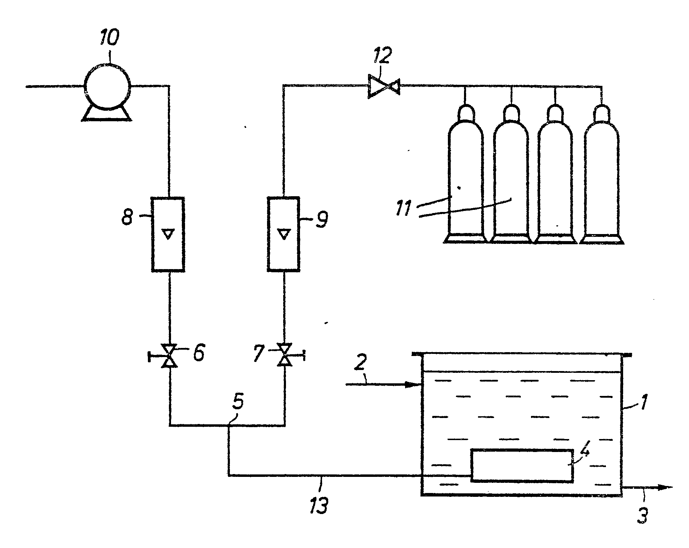

## Patentanspruch

Verfahren zur chargenweisen Vergärung von Würze zu Bier, bei dem der Würze Hefe zugesetzt und der Würze zur Einstellung des erforderlichen Sauerstoffgehaltes Sauerstoff oder ein sauerstoffhaltiges Gas zugeführt wird, dadurch gekennzeichnet, daß der Würze pro Liter eine Menge von 1 bis $1,6 \cdot 10^{-3}$ Nm$^3$ reiner Sauerstoff oder eine entsprechende Menge an Sauerstoff angereicherter Luft zugeführt wird.

## Claim

A process for the charge-wise fermentation of wort to beer, in which yeast is added to the wort and in order to set the required oxygen content, oxygen or an oxygen-containing gas is fed to the wort, characterised in that an amount of 1 to $1.6 \cdot 10^{-3}$ Nm$^3$ of pure oxygen or a corresponding amount of oxygen-enriched air is fed to the wort per litre thereof.

## Revendication

Procédé de fermentation discontinue du moût en bière, procédé dans lequel on ajoute des levures au moût, de l'oxygène ou un gaz contenant de l'oxygène étant amenés au moût pour ajuster la teneur nécessaire en oxygène, procédé caractérisé en ce qu'il consiste à amener au moût, par litre de moût, une quantité de 1 à $1,6 \cdot 10^{-3}$ Nm$^3$ d'oxygène pur, ou une quantité correspondante d'air enrichi en oxygène.